# EUROPÄISCHE PATENTSCHRIFT

(11) **EP 3 504 535 B1**
(45) Veröffentlichungstag und Bekanntmachung des Hinweises auf die Patenterteilung: **06.10.2021**
(21) Anmeldenummer: 17761438.5
(22) Anmeldetag: 16.08.2017
(51) Int. Cl.: G01N 21/03, G01N 21/3504, G01N 21/31

(54) **MESSVORRICHTUNG ZUR ABSORPTIONSMESSUNG VON GASEN**
MEASURING DEVICE FOR MEASURING ABSORPTION OF GASES
DISPOSITIF DE MESURE POUR MESURE DE L'ABSORPTION DES GAZ

(30) Priorität: 23.08.2016 DE 102016010088
(43) Veröffentlichungstag der Anmeldung: 03.07.2019
(73) Patentinhaber: Dräger Safety AG & Co. KGaA, 23560 Lübeck (DE)
(72) Erfinder: TRÖLLSCH, Arne, 23568 Lübeck (DE)
(74) Vertreter: Guthöhrlein, Gerhard
(86) Internationale Anmeldenummer: PCT/EP2017/000980
(87) Internationale Veröffentlichungsnummer: WO 2018/036650

(56) Entgegenhaltungen:
- EP-A1- 0 768 521
- CN-A- 104 111 226
- DE-A1- 2 504 300
- DE-A1- 4 214 840
- DE-A1- 10 124 055
- US-A1- 2010 079 760
- MANNINEN A ET AL: "Versatile multipass cell for laser spectroscopic trace gas analysis", APPLIED PHYSICS B ; LASERS AND OPTICS, SPRINGER, BERLIN, DE, Bd. 109, Nr. 3, 30. März 2012 (2012-03-30) , Seiten 461-466, XP035147614, ISSN: 1432-0649, DOI: 10.1007/S00340-012-4964-2
- MARKUS MANGOLD ET AL: "Circular paraboloid reflection cell for laser spectroscopic trace gas analysis", JOURNAL OF THE OPTICAL SOCIETY OF AMERICA A, Bd. 33, Nr. 5, Mai 2016 (2016-05), Seite 913, XP055385955, US ISSN: 1084-7529, DOI: 10.1364/JOSAA.33.000913

## Beschreibung

Die Erfindung betrifft eine Messvorrichtung zur Absorptionsmessung von Gasen, wobei die Messvorrichtung eine Strahlungsquelle, ein erstes Detektorelement, ein zweites Detektorelement und eine Reflektoranordnung, die einen ersten optischen Pfad zwischen der Strahlungsquelle und dem ersten Detektorelement und einen zweiten optischen Pfand zwischen der Strahlungsquelle und dem zweiten Detektorelement definiert, umfasst.

Zur quantitativen Bestimmung von Gaskonzentrationen von z. B. Kohlendioxid oder Methan in Luft werden Gassensoren genutzt, die die Absorption elektromagnetischer Strahlung in dem jeweiligen Gas bestimmen. Auf Basis der Menge und der Wellenlänge der absorbierten elektromagnetischen Strahlung kann auf die Art des Gases und auf dessen Konzentration geschlossen werden. Die Gassensoren können dabei optische Gassensoren sein, die eine Lichtquelle aufweisen, eine optische Küvette, in der sich das Messgas befindet, und einen oder mehrere Detektoren, die durch optische Bandpassfilter Licht der Mess- und der Referenzwellenlängen detektieren. Mittels des Vergleiches zwischen der Referenzstrahlung und der Messstrahlung, die die absorbierten Anteile der elektromagnetischen Strahlung erfasst, kann die Gaskonzentration bestimmt werden.

Bekannt sind Gassensoren, die Glühlampen als Lichtquellen verwenden. US 6,469,303 B1 sowie die US 6,989,549 B2 beschreiben einen Sensor in einem zylinderförmigen metallischen Gehäuse. Eine Lichtquelle und Detektoren sind innerhalb des Gehäuses angeordnet. Das Gas wird von dem Licht der Lichtquelle durchstrahlt. Über die Reflexion an den metallischen Wänden des Zylinders wird die Strahlung danach auf die Detektoren geführt.

Nachteil der oben genannten Vorrichtungen ist, dass Glühlampen sehr energieintensiv zu betreiben sind und nur langsam modulierbar sind. Daher können sie nur bei kleinen Frequenzen betrieben werden. Glühlampen haben weiter den Nachteil, dass sie empfindlich gegenüber mechanischen Erschütterung sind, da dann der Glühwendel zerreißen kann.

Aus US 9,234,837 B2 ist bekannt, eine LED als Lichtquelle zu nutzen, wobei die Strahlung der LED über mehrere Hohlspiegel und mehrere Planspiele durch eine Messküvette und auf einen Detektor geleitet wird. Die Planspiegel und die Hohlspiegel sind dabei jeweils einander gegenüberliegend auf verschiedenen Seiten der Messküvette angeordnet, so dass die Lichtstrahlen einen zick-zack-förmigen Weg durch die Messküvette zurücklegen.

Aus der US 2009/0235720 A1 ist eine Sensoranordnung bekannt, die eine LED als Lichtquelle benutzt. Das Licht durchquert das Messgas und trifft dann auf einen halbkugelförmigen Spiegel, der das Licht dann auf einen Detektor fokussiert.

Alle oben genannten Vorrichtungen haben den Nachteil, dass die jeweils eingesetzte Optik ineffizient ist, da bei schwach absorbierenden Gasen sehr große Sensoren nötig sind, um die nötigen Absorptionsweglängen zu erreichen.

Aus der DE 2504300 A1 und der DE 10124055 A1 sind Anordnungen bekannt, bei denen durch Mehrfachreflexionen längere Absorptionswege realisiert werden, sodass auch schwach absorbierende Gase mit kleineren Sensoren detektiert werden können.

Die US 2010/079760 A1 beschreibt eine gestapelte Anordnung mehrerer modularer Absorptionszellen, in denen jeweils durch Mehrfachreflexionen relativ große Absorptionslängen realisiert sind.

Die DE 42 14 840 A1 beschreibt die Anordnung verschiedener Lichtquellen und mehrerer Detektorelemente in einer gemeinsamen Ebene zur Bestimmung der Konzentration verschiedener Gase in einer Messzelle aus der gasartspezifischen Absorption einzelner Wellenlängenbereiche.

Aufgabe der Erfindung ist es eine alternative Messvorrichtung zur Absorptionsmessung von Gasen bereitzustellen, die eine geringe Baugröße aufweist und einen geringen Energieverbrauch hat, wobei sie mechanisch robust aufgebaut ist.

Die Aufgabe wird gelöst durch die Merkmale des unabhängigen Anspruchs. Vorteilhafte Weiterbildungen sind Gegenstand der abhängigen Ansprüche.

Bei einer Messvorrichtung zur Absorptionsmessung von Gasen, wobei die Messvorrichtung eine Strahlungsquelle, ein erstes Detektorelement, ein zweites Detektorelement und eine Reflektoranordnung umfasst, definiert die Reflektoranordnung einen ersten optischen Pfad zwischen der Strahlungsquelle und dem ersten Detektorelement und einen zweiten optischen Pfad zwischen der Strahlungsquelle und dem zweiten Detektorelement. Dabei weist der erste optische Pfad mindestens zwei Schnittpunkte mit sich selbst auf. Erfindungsgemäß ist vorgesehen, dass das zweite Detektorelement außerhalb einer durch die Strahlungsquelle und zwei Schnittpunkte des ersten optischen Pfades definierten ersten Ebene angeordnet ist , wobei der zweite optische Pfad keinen Schnittpunkt mit sich selbst aufweist

Dadurch, dass das zweite Detektorelement außerhalb der durch die Strahlungsquelle und zwei Schnittpunkte des ersten optischen Pfades definierten ersten Ebene angeordnet ist, ergibt sich eine größere Flexibilität bei der Anordnung der Detektorelemente und der Strahlungsquelle beispielsweise auf einer gemeinsamen Leiterplatte. Dies unterstützt eine kompakte Bauweise der Messvorrichtung, insbesondere, wenn mehr als zwei Detektorelemente zum Einsatz kommen. Beispielsweise kann ein drittes Detektorelement zusammen mit dem ersten Detektorelement und der Strahlungsquelle in der ersten Ebene angeordnet werden. Das zweite und dritte Detektorelement können dann wahlweise für Referenzmessungen verwendet werden. Darüber hinaus ermöglicht diese Anordnung des zweiten Detektorelements die klare Trennung der Detektorelemente, so dass im Wartungs- bzw. Fehlerfall das betreffende Detektorelement leicht zugänglich ist.

Die Reflektoranordnung ist so ausgelegt, dass zumindest mittels des ersten optischen Pfades ein mehrfaches Durchstrahlen desselben Gasvolumens mit der Messstrahlung bewirkt wird. Dabei wird unter einem Schnittpunkt des optischen Pfades eine Kreuzung unterschiedlicher Abschnitte des optischen Pfades verstanden, die einen von 0° bzw. 360° und deren ganzzahligen Vielfachen verschiedenen Winkel aufweist. Dabei wird das Messgasvolumen insgesamt mehrfach von der Messstrahlung durchlaufen, bevor die Messstrahlung auf das erste Detektorelement trifft. Dadurch wird die Absorptionsweglänge in schwach absorbierenden Gasen vervielfacht. Durch das Schneiden des optischen Pfades mit sich selbst wird dabei das benötigte Messgasvolumen auf ein Minimum beschränkt. Der gesamte optische Pfad wird dadurch auf einem sehr kleinen Volumen bereitgestellt. Der optische Pfad wird in dem Messvolumen durch die Reflektoranordnung sich selbst schneidend gefaltet. Durch die Faltung des optischen Pfades sind die Einfallswinkel der Messstrahlung an der Reflektoranordnung klein. Die Messvorrichtung ist damit extrem kompakt und kann weiter effizient betrieben werden, da Wasserfilme auf den Optiken durch die kleinen Einfallswinkel nur einen minimalen Einfluss auf die Intensität der elektrischen Strahlung haben. Weiter ist die Vorrichtung gegenüber Erschütterungen sehr unempfindlich, da die optischen Elemente einfach aufgebaut und auf kleinem Raum zusammengefasst sind.

Vorteilhafterweise umfasst der erste optische Pfad mindestens drei, vorzugsweise mindestens vier, vorzugsweise mindestens fünf, besonders vorzugsweise sechs, Schnittpunkte mit sich selbst. Je höher die Anzahl der Schnittpunkte ist, desto häufiger wird das Messvolumen durch die Messstrahlung durchlaufen. Weiter bedeutet eine höhere Anzahl von Schnittpunkten, dass die Messvorrichtung kleinere Abmessungen aufweisen kann als mit einer niedrigeren Anzahl von Schnittpunkten. Die Kompaktheit der Messvorrichtung sowie der Vorteil der günstigeren Herstellung der Messvorrichtung kann auf diese Weise weiter vergrößert werden.

In nicht erfindungsgemäßen Anordnungen kann der zweite optische Pfad ebenso wie der erste optische Pfad zwei oder mehr Schnittpunkte mit sich selbst aufweisen. Es gilt dann für ihn das zum ersten optischen Pfad gesagte entsprechend.

Zweckmäßigerweise umfasst die Messvorrichtung eine Messkammer mit einem die Messkammer umschließenden Wandelement, wobei die Strahlungsquelle, das erste Detektorelement, das zweite Detektorelement und die Reflektoranordnung an dem Wandelement angeordnet sind. Dies ermöglicht eine einfache Bauform und vereinfacht die Bereitstellung kleiner Einfallswinkel an der Reflektoranordnung.

Erfindungsgemäß ist vorgesehen, dass der zweite optische Pfad keinen Schnittpunkt mit sich selbst aufweist.

Der zweite optische Pfad ist damit kürzer als der erste optische Pfad. Damit weist der zweite optische Pfad einen kurzen Absorptionsweg in dem Messgas auf, mit dem stark absorbierende Gase gemessen werden können. Die Kombination des ersten und zweiten optischen Pfades in der Messvorrichtung ermöglicht die gleichzeitige Messung von schwach und stark absorbierenden Gasen. Schwach absorbierende Gase werden dann mittels des ersten optischen Pfads ausgewertet und stark absorbierende Gase mittels des zweiten optischen Pfads. Mit der Messvorrichtung können gleichzeitig zwei verschieden absorbierende Gase in einem kompakten Gasvolumen durchgeführt werden. Beispielsweise können gleichzeitig Methan und Kohlendioxid gemessen werden. Weiter können unterschiedliche Konzentrationsbereiche desselben Gases vermessen werden. Der erste optische Pfad kann in diesem Fall zum Messen von z. B. Methan im Konzentrationsbereich von 0 Vol.-% bis 5 Vol.-% und der zweite optische Pfad zum Messen von Methan von 5 Vol.-% bis 100 Vol.-% verwendet werden. Dies spart Platz und Kosten, da für mehrere Gase ein und dieselbe Messvorrichtung genutzt werden kann. Das erste und das zweite Detektorelement können dabei einstückig ausgeführt sein, wobei unterschiedliche Bereiche eines Gesamtdetektors das erste und das zweite Detektorelement definieren können.

Mit Vorteil weist die Reflektoranordnung für den ersten optischen Pfad zwei Spiegelelemente sowie ein erstes und ein zweites Hohlspiegelelement auf, wobei ein erster Fokus der Reflektoranordnung auf der Strahlungsquelle und ein zweiter Fokus der Reflektoranordnung auf dem erstem Detektorelement angeordnet ist, wobei das erste und das zweite Hohlspiegelelement vorzugsweise parabolisch sind. Die Spiegelelemente sind dabei so angeordnet, dass sie Licht von einem Hohlspiegelelement auf das jeweilig andere Spiegelelement reflektieren. Auf diese Weise können die optischen Elemente der Reflektoranordnung aus einfachen Komponenten bestehen, die kostengünstig hergestellt werden können. Weiter kann mit diesen Elementen der optische Pfad vergleichsweise einfach berechnet und festgelegt werden.

Vorteilhafterweise weist die Reflektoranordnung im zweiten optischen Pfad ein drittes Hohlspiegelelement auf, das die Strahlungsquelle auf das zweite Detektorelement abbildet. Mit dem dritten Hohlspiegelelement wird der zweite optische Pfad definiert, der beispielsweise von der Strahlungsquelle zum dritten Hohlspiegelelement und von dem dritten Hohlspiegelelement zum zweiten Detektorelement verläuft. Schnittpunkte kommen in diesem Fall im zweiten optischen Pfad nicht vor, sodass das Messgasvolumen auf dem zweiten optischen Pfad lediglich zwei Mal von der Messstrahlung durchlaufen wird. Mit einem derartigen zweiten optischen Pfad können stark absorbierende Gase vermessen werden.

Mit Vorteil ist das dritte Hohlspiegelelement zwischen dem ersten und dem zweiten Hohlspiegelelement angeordnet. Um aus der ersten Ebene heraus zu reflektieren, kann das dritte Hohlspiegelelement gegenüber der ersten Ebene geneigt sein. Alternativ oder zusätzlich kann das dritte Hohlspiegelelement asymmetrisch geformt sein. Das dritte Hohlspiegelelement kann für die Messung an stark absorbierenden Gasen vorzugsweise kleiner als das erste und zweite Hohlspiegelelement ausgebildet sein, da der zweite optische Pfad auf Grund der starken Absorption auch bei nur einer einzigen Reflexion lediglich einen kleinen Strahlquerschnitt benötigt. Diese Anordnung spart Platz, so dass eine weitere Erhöhung der Kompaktheit der Messvorrichtung erreicht wird.

In einer alternativen Ausführungsform sind das dritte Hohlspiegelelement, das erste Hohlspiegelelement und das zweite Hohlspiegelelement in einem Dreieck angeordnet. Diese Anordnung ermöglicht einen modularen Aufbau der Messvorrichtung. Dabei kann ein Modul mit dem zweiten Detektorelement und dem dritten Hohlspiegelelement mit einer Messvorrichtung verbunden werden, die den ersten optischen Pfad definiert und zur Messung beispielsweise eines schwach absorbierenden Gases geeigneten ist. Mittels des Moduls können dann weitere Gase bzw. Gaskonzentrationen erfasst werden.

Zweckmäßigerweise ist ein optisches Filterelement zwischen der Messkammer und dem ersten und/oder zweiten Detektorelement angeordnet. Mittels des Filterelements wird ein Ausschnitt aus dem von der Strahlungsquelle emittierten Spektrum für die Bestimmung der Gaskonzentration gewählt. Das Filterelement ist dabei auf das jeweilig zu messende Gas abgestimmt.

Vorteilhafterweise ist die Messkammer zwischen 3 mm und 12 mm, vorzugsweise 6 mm, hoch und weist einen Durchmesser von zwischen 9 mm und 36 mm, vorzugsweise 18 mm, auf. Diese Abmessungen sind sehr kompakt bei hoher Stabilität.

Es ist weiter vorteilhaft, wenn das Wandelement in einer Ebene, in der der erste optische Pfad verläuft, einen fünfeckigen oder sechseckigen Innenquerschnitt aufweist. Mittels dieses Querschnittes wird die Montage der Reflektoranordnung, der Strahlenquelle und der Detektorelemente vereinfacht. Weiter wird durch diesen Querschnitt die Festlegung von optischen Pfaden erleichtert.

Die Erfindung wird anhand vorteilhafter Ausführungsbeispiele mittels der beigefügten Zeichnungen näher erläutert.

Es zeigen:
- Figur 1a,b,c:: eine schematische Darstellung einer ersten Ausführungsform der Messvorrichtung zur Absorptionsmessung von mindestens einem schwach absorbierenden Gas und einem stark absorbierenden Gas;
- Figur 2a,b,c:: schematische Darstellungen einer zweiten Ausführungsform der Messvorrichtung zur Absorptionsmessung von mindestens einem schwach absorbierenden und mindestens einem stark absorbierenden Gas.

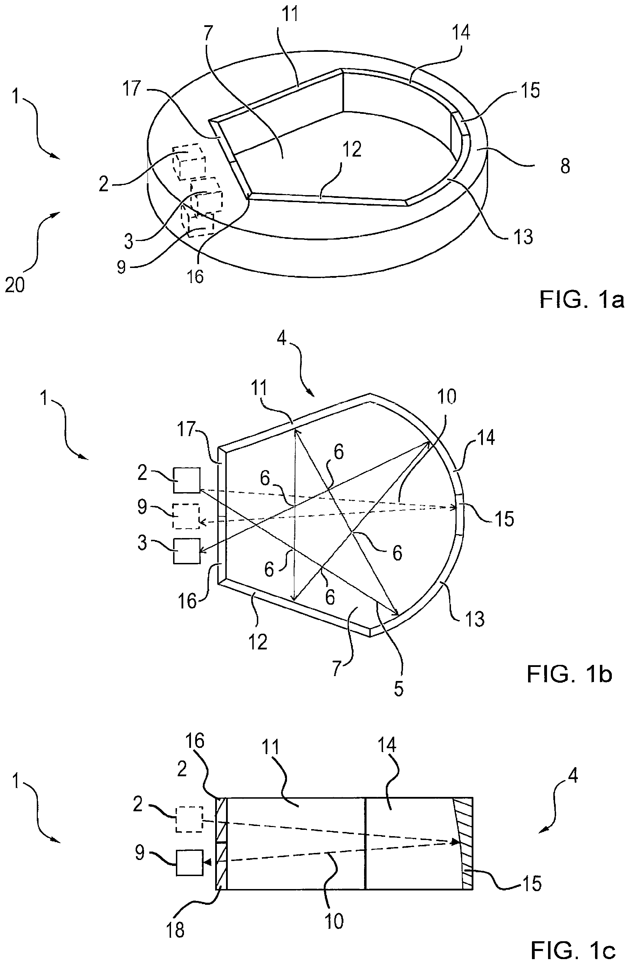

Eine Messvorrichtung zur Absorptionsmessung von Gasen wird im Folgenden in ihrer Gesamtheit mit dem Bezugszeichen 1 referenziert. Gemäß Figur 1 umfasst die Messvorrichtung 1 ein Wandelement 8, das eine im Querschnitt sechseckige Messkammer 7 begrenzt. Das Wandelement 8 bildet dabei ein Rohr mit einem sechseckigen Innenquerschnitt.

An dem Wandelement 8 ist eine Strahlungsquelle 2 sowie ein erstes Detektorelement 3 und ein zweites Detektorelement 9 angeordnet. Dabei sind die Strahlungsquelle 2, das erste Detektorelement 3 und das zweite Detektorelement 9 an einer Seite des sechseckigen Innenquerschnitts des Wandelements 8 angeordnet. Die Strahlungsquelle 2 emittiert elektromagnetische Strahlung in die Messkammer 7. Das erste Detektorelement 3 und das zweite Detektorelement 9 detektieren elektromagnetische Strahlung, die aus der Messkammer 7 gestrahlt wird. An den weiteren fünf Seiten des Innenquerschnitts des Wandelements 8 sind ein erstes Spiegelelement 11 und ein zweites Spiegelelement 12 sowie ein erstes Hohlspiegelelement 13, ein zweites Hohlspiegelelement 14 und ein drittes Hohlspiegelelement 15 angeordnet. Das dritte Hohlspiegelelement 15 ist zwischen dem ersten Hohlspiegelelement 13 und dem zweiten Hohlspiegelelement 14 angeordnet.

Zwischen der Messkammer 7 und dem ersten Detektorelement 3 ist ein erstes optisches Filterelement 16 angeordnet, das lediglich einen bestimmten Wellenlängenbereich der elektromagnetischen Strahlung durchlässt. Zwischen der Messkammer 7 und dem zweiten Detektorelement 9 ist ein zweites optisches Filterelement 18 angeordnet, das ebenfalls lediglich einen bestimmten Wellenlängenbereich der elektromagnetischen Strahlung durchlässt. Das erste optische Filterelement 16 kann dabei einen anderen Bereich aus der Messstrahlung filtern als das zweite optische Filterelement 18. Der Übersichtlichkeit halber ist das zweite optische Filterelement 18 in den Figuren 1a und 1b nicht dargestellt.

Die Strahlungsquelle emittiert breitbandig und ist hinter einem Transparentelement 17 angeordnet, das zumindest in den vom ersten und zweiten Detektorelement 3, 9 zu detektierenden Wellenlängenbereichen keine Filterwirkung aufweist.

Das Wandelement 8 kann in einer nicht dargestellten Ausführungsform auf der der Strahlungsquelle 2 und den Detektorelementen 3, 9 zugewandten Seite der optischen Filterelemente 16, 18 und des Transparentelements 17 abgeflacht, vorzugsweise im Wesentlichen plan ausgeführt sein. Auf diese Weise können Strahlungsquelle 2 und Detektorelemente 3, 9 auf einer gemeinsamen Leiterplatte angeordnet und hinter den optischen Filterelementen 16, 18 und dem Transparentelement 17 am Wandelement 8 angeordnet werden. Das Wandelement 8 weist dann im Bereich der optischen Filterelemente 16, 18 und des Transparentelements 17 eine gemeinsame oder jeweils eine Öffnung für die elektromagnetische Strahlung auf. Die optischen Filterelemente 16, 18 sowie das Transparentelement 17 können auch zusammen mit den Detektorelementen 3, 9 und der Strahlungsquelle 2 auf der Leiterplatte befestigt und in der Öffnung bzw. den Öffnungen angeordnet sein.

Wie insbesondere aus Figur 1b ersichtlich ist, ist die Messvorrichtung 1 in einer ersten Ebene spiegelsymmetrisch aufgebaut. Die erste Ebene wird dabei durch die Strahlungsquelle 2 und zwei Schnittpunkte 6 eines von der Strahlungsquelle 2 zum ersten Detektorelement 3 verlaufenden ersten optischen Pfades 5 definiert. Die Symmetrieebene verläuft so, dass die Strahlungsquelle 2 auf das erste Detektorelement 3, das Transparentelement 17 auf das erste optische Filterelement, das erste Spiegelelement 11 auf das zweite Spiegelelement 12, das erste Hohlspiegelelement 13 auf das zweite Hohlspiegelelement 14 und das dritte Hohlspiegelelement 15 auf sich selbst abgebildet werden.

Das Transparentelement 17 und das erste optische Filterelement 16 sind Bestandteil einer Seite des Sechsecks. Die beiden dem Transparentelement 17 bzw. dem ersten optischen Filterelement 16 benachbarten Seiten des Sechsecks sind durch das Spiegelelement 11 bzw. das Spiegelelement 12 belegt. Dem Transparentelement 17 bzw. dem ersten optischen Filterelement 16 jeweils gegenüberliegend sind das zweite Hohlspiegelelement 14 bzw. das erste Hohlspiegelelement 13 angeordnet.

Das erste Hohlspiegelelement 13 ist auf die Strahlungsquelle 2 fokussiert. Das heißt, dass elektromagnetische Strahlung, die von der Strahlungsquelle 2 emittiert wird und auf das Hohlspiegelelement 13 trifft, durch das Hohlspiegelelement 13 kollimiert wird. Das heißt, dass das Hohlspiegelelement 13 die von der Strahlungsquelle 2 ausgehende Strahlung parallelisiert.

Der Fokus des zweiten Hohlspiegelelements 14 ist auf das erste Detektorelement 3 ausgerichtet. Elektromagnetische Strahlung, die parallel zur optischen Achse des zweiten Hohlspiegelelements 14 auf das zweite Hohlspiegelelement 14 trifft, wird daher auf das erste Detektorelement 3 fokussiert.

In Figur 1b ist der in der ersten Ebene verlaufende erste optischer Pfad 5 für einen Strahl aus der Strahlungsquelle 2 dargestellt. Die Spiegelelemente 11, 12 sowie die Hohlspiegelelemente 13, 14, 15 bilden dabei eine Reflektoranordnung 4. Die Reflektoranordnung 4 leitet elektromagnetische Strahlung aus der Strahlungsquelle 2 auf mindestens dem ersten optischen Pfad 5 zu dem ersten Detektorelement 3. Dabei startet der erste optische Pfad 5 an der Strahlungsquelle 2 und trifft dann auf das erste Hohlspiegelelement 13. Von dem ersten Hohlspiegelelement 13 wird die elektromagnetische Strahlung auf das erste Spiegelelement 11 reflektiert. Das erste Spiegelelement 11 reflektiert die elektromagnetische Strahlung weiter auf das zweite Spiegelelement 12 und von dort aus auf das zweite Hohlspiegelelement 14. Das zweite Hohlspiegelelement 14 reflektiert die Strahlung in das erste Detektorelement 3. Dabei wird die Messkammer 7 fünfmal durch die elektromagnetische Strahlung durchlaufen. Der erste optische Pfad 5 schneidet sich dabei selbst sechs Mal an den Schnittpunkten 6.

Dadurch, dass die elektromagnetische Strahlung auf dem ersten optischen Pfad 5 die Messkammer fünfmal durchläuft, ist es möglich mit dem ersten Detektorelement 3 ein schwach absorbierendes Gas wie beispielsweise Methan zu detektieren.

Das dritte Hohlspiegelelement 15 ist so ausgebildet und angeordnet, dass es die Strahlungsquelle 2 auf das zweite Detektorelement 9 abbildet. Das heißt, dass elektromagnetische Strahlung auf einem zweiten optischen Pfad 10 von der Strahlungsquelle 2 über das Hohlspiegelelement 15 auf das zweite Detektorelement 9 reflektiert wird, wobei sich der zweite optische Pfad 10 in diesem Ausführungsbeispiel nicht mit sich selbst schneidet. Das zweite Detektorelement 9 ist außerhalb der ersten Ebene angeordnet. Dies kann beispielsweise erreicht werden, indem das dritte Hohlspiegelelement 15 wie in Figur 1c gezeigt asymmetrisch ausgebildet und/oder gegenüber der ersten Ebene geneigt angeordnet und ausgerichtet ist. Der Übersichtlichkeit halber sind in Figur 1c der erste optische Pfad 5, das zweite Detektorelement 3 und das Transparentelement 17 nicht dargestellt.

Dadurch, dass das zweite Detektorelement 9 außerhalb der durch die Strahlungsquelle 2 und zwei Schnittpunkte 6 des ersten optischen Pfades 5 definierten ersten Ebene angeordnet ist, ergibt sich eine größere Flexibilität bei der Anordnung der Detektorelemente 3, 9 und der Strahlungsquelle 2 insbesondere auf einer gemeinsamen Leiterplatte. Dies unterstützt eine kompakte Bauweise der Messvorrichtung, insbesondere, wenn mehr als zwei Detektorelemente 3, 9 zum Einsatz kommen. Beispielsweise kann ein drittes Detektorelement zusammen mit dem ersten Detektorelement 3 und der Strahlungsquelle 2 in der ersten Ebene angeordnet werden. Das zweite und dritte Detektorelement können dann wahlweise für Referenzmessungen verwendet werden. Darüber hinaus ermöglicht diese Anordnung des zweiten Detektorelements 9 eine klare Trennung der Detektorelemente, so dass im Wartungs- bzw. Fehlerfall das betreffende Detektorelement leicht zugänglich ist.

In einer nicht erfindungsgemäßen Anordnung ist der zweite optische Pfad so festgelegt, dass die Messkammer 7 mehrfach durchlaufen wird und sich der zweite optische Pfad mit sich selbst schneidet. Hierzu werden weitere Spiegel- und Hohlspiegelelemente zwischen dem ersten Spiegelelement 11 und dem zweiten Hohlspiegelelement 14 und/oder zwischen dem zweiten Spiegelelement 12 und dem ersten Hohlspiegelelement 13 und/oder zwischen dem Transparentelement 17 und dem ersten optischen Filterelement 16 und/oder dem zweiten optischen Filterelement 18 angeordnet. Durchläuft auch der zweite optische Pfad die Messkammer 7 mehrfach und schneidet sich dabei ggf. mit sich selbst, kann mit einer sehr kompakten Messanordnung auch mittels des zweiten Detektorelements 9 ein weiteres schwach absorbierendes Gas detektiert werden.

Die Spiegelelemente 11, 12 sind in der dargestellten Ausführungsform plan ausgebildet. In einer nicht dargestellten alternativen Ausführungsform weisen die Spiegelelemente 11, 12 einen Krümmungsradius auf, der vorzugsweise kleiner Null ist, so dass die Spiegelelemente 11, 12 konkav ausgebildet sind. Dadurch kann einem Divergieren der elektromagnetischen Strahlung entgegengewirkt werden.

Weiter kann die elektromagnetische Strahlung, die von der Strahlungsquelle 2 emittiert wird, zuerst auf eines der Spiegelelemente 11, 12 treffen. Die Reflektoranordnung 4 kann dabei so ausgebildet sein, dass diese elektromagnetische Strahlung nicht auf das Detektorelement 3 trifft. Alternativ kann die Reflektoranordnung 4 so ausgestaltet sein, dass auch diese elektromagnetische Strahlung auf einem weiteren, nicht dargestellten optischen Pfad auf das Detektorelement 3 trifft.

Die optischen Pfade 5, 10 können natürlich auch anders verlaufen, als in den Figuren dargestellt, wobei beim zweiten optischen Pfad 10 die Strahlung, die von der Strahlungsquelle 2 direkt auf das dritte Hohlspiegelelement 15 trifft, den Bereich definiert, in dem der zweite optische Pfad 10 verlaufen muss. Entsprechend kann der erste optische Pfad 5 nur außerhalb dieses Bereichs von der Strahlungsquelle 2 aus verlaufen.

Das zweite Detektorelement 9 kann auch unmittelbar angrenzend zum ersten Detektorelement 3 angeordnet sein. In diesem Fall können das erste Detektorelement 3 und das zweite Detektorelement 9 auf einem gemeinsamen Detektor einstückig zusammengefasst sein. Das zweite Hohlspiegelelement 14 und das dritte Hohlspiegelelement 15 fokussieren in diesem Fall die elektromagnetische Strahlung auf verschiedene Bereiche des gemeinsamen Detektors.

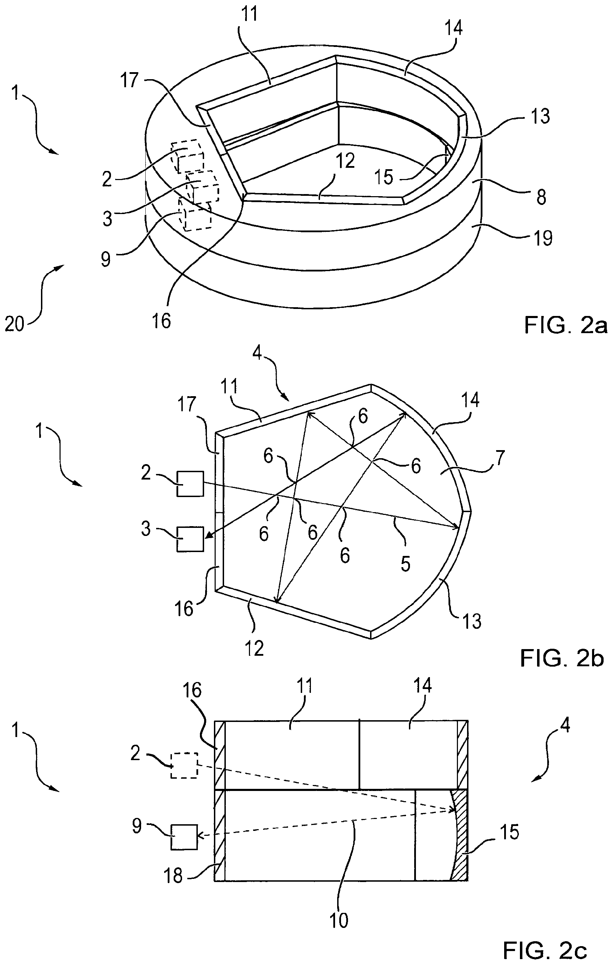

In Figur 2 ist eine alternative Ausführungsform dargestellt, mit der ein schwach absorbierendes und ein stark absorbierendes Gas untersucht werden können. Der in Figur 2a und 2c jeweils oben dargestellte Teil der Messvorrichtung 1 entspricht dabei der Anordnung der Komponenten in der ersten Ebene gemäß Figur 1 unter Weglassen des dritten Hohlspiegelelements 15. Dabei definiert die derart modifizierte Anordnung eine erste Messebene mit einem ersten Messvolumen, das einen fünfeckigen Querschnitt aufweist. In der ersten Messebene gelangt wie zuvor anhand von Figur 1 erläutert und in Figur 2b dargestellt, elektromagnetische Strahlung auf dem ersten optischen Pfad 5 in das erste Detektorelement 3 und ein schwach absorbierendes Gas kann detektiert werden. Der Übersichtlichkeit halber sind der zweite optische Pfad 10, das zweite Detektorelement 9 und das dritte Hohlspiegelelement 15 in Figur 2b nicht gezeigt.

Unterhalb der ersten Messebene ist eine zweite Messebene mit einem zweiten Messvolumen angeordnet. In der zweiten Messebene sind das zweite Detektorelement 9, das zweite optische Filterelement 18 sowie das dritte Hohlspiegelelement 15 angeordnet. Das zweite Detektorelement 9, das zweite optische Filterelement 18 und das dritte Hohlspiegelelement 15 sind dabei in einem Erweiterungsmodul 19 angeordnet. Aus Gründen der Übersichtlichkeit ist das zweite optische Filterelement in den Figuren 2a und 2b nicht gezeigt.

Das zweite Detektorelement 9 ist gemäß Figur 2 nicht auf der gleichen Ebene in Bezug zum Querschnitt der Messvorrichtung wie die Strahlungsquelle 2, die Schnittpunkte 6 und ggf. das erste Detektorelement 3 angeordnet.

Figur 2c zeigt den zweiten optischen Pfad 10. Dabei wird die elektromagnetische Strahlung aus der Strahlungsquelle 2 durch die erste Messebene auf das dritte Hohlspiegelelement 15, das in der zweiten Messebene angeordnet ist, gestrahlt und von dort auf das zweite Detektorelement 9 fokussiert. Der Übersichtlichkeit halber sind in Figur 2c der erste optische Pfad 5, das zweite Detektorelement 3 und das Transparentelement 17 nicht dargestellt.

Eine Messvorrichtung mit einer ersten Messebene gemäß Figur 2 kann als separates Bauteil gefertigt und ohne Erweiterungsmodul 19 betrieben werden. Das Erweiterungsmodul 19 kann bei Bedarf mit dieser Messvorrichtung verbunden werden. Die Messvorrichtung und das Erweiterungsmodul 19 bilden dabei ein System 20 zur Absorptionsmessung von Gasen. Erstes, zweites und drittes Hohlspiegelelement 13, 14, 15 sind in diesem modularen Aufbau in einem Dreieck angeordnet.

Ein Beispiel für die Messung von zwei Gasen mit unterschiedlichen Absorptionseigenschaften kann zum Beispiel die simultane Messung von Methan und Kohlendioxid sein. Methan absorbiert Infrarotstrahlung nur schwach. Daher muss Methan mittels des längeren ersten optischen Pfades 5 vermessen werden. Kohlendioxid absorbiert hingegen deutlich mehr Infrarotstrahlung, sodass Kohlendioxid mittels des kürzeren zweiten optischen Pfades 10 vermessen wird.

Die Detektorelemente 3, 9 können für das jeweils andere Detektorelement 3, 9 eine Referenzmessung durchführen. Wenn die beiden zu messenden Gase verschiedene Absorptionswellenlängen aufweisen, ist auf diese Weise die Referenzmessung besonders einfach durchführbar.

Alternativ oder zusätzlich wird in einer nicht dargestellten Ausführungsform das dritte Hohlspiegelelement 15 in Figur 1 durch zwei übereinander liegende Hohlspiegelelemente ersetzt. Eines dieser Hohlspiegelelemente bildet dabei wie zuvor anhand von Figur 1 erläutert die Strahlung der Strahlungsquelle auf das zweite Detektorelement ab, während das andere Hohlspiegelelement die Strahlung auf ein zusätzliches viertes Detektorelement abbildet, das vorzugsweise in der ersten Ebene angeordnet ist, aber selbstverständlich auch oberhalb der ersten Ebene angeordnet sein kann, und beispielsweise als Detektor für Referenzmessung dient.

Auf diese Weise kann die als Multireflexionszelle ausgebildete Messvorrichtung mit deutlich weniger Bauteilen und damit deutlich günstiger hergestellt und betrieben werden.

### BEZUGSZEICHENLISTE

- 1: Messvorrichtung zur Absorptionsmessung von Gasen
- 2: Strahlungsquelle
- 3: erstes Detektorelement
- 4: Reflektoranordnung
- 5: erster optischer Pfad
- 6: Schnittpunkt
- 7: Messkammer
- 8: Wandelement
- 9: zweites Detektorelement
- 10: zweiter optischer Pfad
- 11: erstes Spiegelelement
- 12: zweites Spiegelelement
- 13: erstes Hohlspiegelelement
- 14: zweites Hohlspiegelelement
- 15: drittes Hohlspiegelelement
- 16: erstes optisches Filterelement
- 17: Transparentelement
- 18: zweites optisches Filterelement
- 19: Erweiterungsmodul
- 20: System zur Absorptionsmessung von Gasen

## Patentansprüche

1. Messvorrichtung zur Absorptionsmessung von Gasen, wobei die Messvorrichtung (1) eine Strahlungsquelle (2), ein erstes Detektorelement (3), ein zweites Detektorelement (9) und eine Reflektoranordnung (4) umfasst, wobei die Reflektoranordnung (4) einen ersten optischen Pfad (5) zwischen der Strahlungsquelle (2) und dem ersten Detektorelement (3) und einen zweiten optischen Pfad (10) zwischen der Strahlungsquelle (2) und dem zweiten Detektorelement (9) definiert, wobei der erste optische Pfad (5) mindestens zwei Schnittpunkte mit sich selbst aufweist **dadurch gekennzeichnet, dass** das zweite Detektorelement (9) außerhalb einer durch die Strahlungsquelle (2) und zwei Schnittpunkte (6) des ersten optischen Pfades (5) definierten ersten Ebene angeordnet ist,
wobei der zweite optische Pfad (10) keinen Schnittpunkt mit sich selbst aufweist.

2. Messvorrichtung nach Anspruch 1, **dadurch gekennzeichnet, dass** der erste optische Pfad (5) mindestens drei, vorzugsweise mindestens vier, vorzugsweise mindestens fünf, besonders vorzugsweise mindestens sechs, Schnittpunkte mit sich selbst aufweist.

3. Messvorrichtung nach einem der Ansprüche 1 oder 2,
**dadurch gekennzeichnet, dass** die Messvorrichtung (1) eine Messkammer (7) mit einem die Messkammer (7) umschließenden Wandelement (8) aufweist, wobei die Strahlungsquelle (2), das erste Detektorelement (3) und die Reflektoranordnung (4) an dem Wandelement (8) angeordnet sind.

4. Messvorrichtung nach Anspruch 3, **dadurch gekennzeichnet, dass** das Wandelement (8) in einer Ebene, in der der erste optische Pfad (5) verläuft, einen fünfeckigen oder sechseckigen Querschnitt aufweist.

5. Messvorrichtung nach einem der Ansprüche 1 bis 4, **dadurch gekennzeichnet, dass** die Reflektoranordnung (4) für den ersten optischen Pfad (5) ein erstes und ein zweites Spiegelelement (11, 12) sowie ein erstes und ein zweites Hohlspiegelelement (13, 14) aufweist, wobei ein Fokus der Reflektoranordnung(4) auf der Strahlungsquelle (2) und der andere Fokus der Reflektoranordnung (4) auf dem erstem Detektorelement (3) angeordnet ist, wobei die Hohlspiegelelemente (13, 14) vorzugsweise parabolisch sind.

6. Messvorrichtung nach Anspruch 5, **dadurch gekennzeichnet, dass** die Reflektoranordnung (4) im zweiten optischen Pfad (10) ein drittes Hohlspiegelelement (15) umfasst, das die Strahlungsquelle (2) auf das zweite Detektorelement (9) abbildet.

7. Messvorrichtung nach Anspruch 6, **dadurch gekennzeichnet, dass** das dritte Hohlspiegelelement (15) zwischen dem ersten Hohlspiegelelement (13) und dem zweiten Hohlspiegelelement (14) angeordnet ist.

8. Messvorrichtung nach Anspruch 6, **dadurch gekennzeichnet, dass** das dritte Hohlspiegelelement (15), das erste Hohlspiegelelement (13) und das zweite Hohlspiegelelement (14) in einem Dreieck angeordnet sind.

9. Messvorrichtung nach einem der Ansprüche 1 bis 8, **dadurch gekennzeichnet, dass** ein optisches Filterelement (16, 18) zwischen der Messkammer (7) und dem ersten Detektorelement (3) und/oder dem zweiten Detektorelement (9) angeordnet ist.

## Claims

1. Measurement apparatus for measuring the absorption of gases, wherein the measurement apparatus (1) comprises a radiation source (2), a first detector element (3) and a second detector element (9) and a reflector arrangement (4), wherein the reflector arrangement (4) defines a first optical path (5) between the radiation source (2) and the first detector element (3) and a second optical path (10) between the radiation source (2) and the second detector element (9), wherein the first optical path (5) has at least two points of intersection with itself, **characterized in that** the second detector element (9) is arranged outside a first plane that is defined by the radiation source (2) and two points of intersection (6) of the first optical path (5),
wherein the second optical path (10) does not have a point of intersection with itself.

2. Measurement apparatus according to Claim 1, **characterized in that** the first optical path (5) has at least three, preferably at least four, preferably at least five, with particular preference for at least six, points of intersection with itself.

3. Measurement apparatus according to either of Claims 1 and 2, **characterized in that** the measurement apparatus (1) has a measurement chamber (7) having a wall element (8) that encloses the measurement chamber (7), wherein the radiation source (2), the first detector element (3) and the reflector arrangement (4) are arranged at the wall element (8).

4. Measurement apparatus according to Claim 3, **characterized in that** the wall element (8) has a pentagonal or a hexagonal cross section in a plane in which the first optical path (5) extends.

5. Measurement apparatus according to one of Claims 1 to 4, **characterized in that** the reflector arrangement (4) has, for the first optical path (5), a first and a second mirror element (11, 12) and also a first and a second concave mirror element (13, 14), wherein one focus of the reflector arrangement (4) is arranged on the radiation source (2) and the other focus of the reflector arrangement (4) is arranged on the first detector element (3), wherein the concave mirror elements (13, 14) are preferably parabolic.

6. Measurement apparatus according to Claim 5, **characterized in that** the reflector arrangement (4) in the second optical path (10) comprises a third concave mirror element (15) that images the radiation source (2) onto the second detector element (9).

7. Measurement apparatus according to Claim 6, **characterized in that** the third concave mirror element (15) is arranged between the first concave mirror element (13) and the second concave mirror element (14).

8. Measurement apparatus according to Claim 6, **characterized in that** the third concave mirror element (15), the first concave mirror element (13) and the second concave mirror element (14) are arranged in a triangle.

9. Measurement apparatus according to one of Claims 1 to 8, **characterized in that** an optical filter element (16, 18) is arranged between the measurement chamber (7) and the first detector element (3) and/or the second detector element (9).

## Revendications

1. Dispositif de mesure pour mesurer l'absorption de gaz, dans lequel le dispositif de mesure (1) comprend une source de rayonnement (2), un premier élément détecteur (3), un deuxième élément détecteur (9) et un ensemble réflecteur (4), dans lequel l'ensemble réflecteur (4) définit un premier chemin optique (5) entre la source de rayonnement (2) et le premier élément détecteur (3) et un deuxième chemin optique (10) entre la source de rayonnement (2) et le deuxième élément détecteur (9), dans lequel le premier chemin optique (5) présente au moins deux intersections avec lui-même,
**caractérisé en ce que** le deuxième élément détecteur (9) est disposé en-dehors d'un premier plan défini par la source de rayonnement (2) et deux intersections (6) du premier chemin optique (5), dans lequel le deuxième chemin optique (10) ne présente pas d'intersection avec lui-même.

2. Dispositif de mesure selon la revendication 1, **caractérisé en ce que** le premier chemin optique (5) présente au moins trois, de préférence au moins quatre, de préférence au moins cinq, de manière particulièrement préférée au moins six intersections avec lui-même.

3. Dispositif de mesure selon l'une des revendications 1 et 2, **caractérisé en ce que** le dispositif de mesure (1) présente une chambre de mesure (7) avec un élément de paroi (8) entourant la chambre de mesure (7), dans lequel la source de rayonnement (2), le premier élément détecteur (3) et l'ensemble réflecteur (4) sont disposés au niveau de l'élément de paroi (8).

4. Dispositif de mesure selon la revendication 3, **caractérisé en ce que** l'élément de paroi (8) présente, dans un plan dans lequel s'étend le premier chemin optique (5), une section transversale pentagonale ou hexagonale.

5. Dispositif de mesure selon l'une des revendications 1 à 4, **caractérisé en ce que** l'ensemble réflecteur (4) présente, pour le premier chemin optique (5), un premier et un deuxième élément de miroir (11, 12) ainsi qu'un premier et un deuxième élément de miroir concave (13, 14), dans lequel un foyer de l'ensemble réflecteur (4) est situé sur la source de rayonnement (2) et l'autre foyer de l'ensemble réflecteur (4) est situé sur le premier élément détecteur (3), dans lequel les éléments de miroir concave (13, 14) sont de préférence paraboliques.

6. Dispositif de mesure selon la revendication 5, **caractérisé en ce que** l'ensemble réflecteur (4) comprend, sur le deuxième chemin optique (10), un troisième élément de miroir concave (15) qui représente la source de rayonnement (2) sur le deuxième élément détecteur (9).

7. Dispositif de mesure selon la revendication 6, **caractérisé en ce que** le troisième élément de miroir concave (15) est disposé entre le premier élément de miroir concave (13) et le deuxième élément de miroir concave (14).

8. Dispositif de mesure selon la revendication 6, **caractérisé en ce que** le troisième élément de miroir concave (15), le premier élément de miroir concave (13), et le deuxième élément de miroir concave (14) sont disposés en triangle.

9. Dispositif de mesure selon l'une des revendications 1 à 8, **caractérisé en ce qu'**un élément de filtre optique (16, 18) est disposé entre la chambre de mesure (7) et le premier élément détecteur (3) et/ou le deuxième élément détecteur (9).
